(19) Europäisches Patentamt
European Patent Office
Office européen des brevets

(11) EP 0 658 580 B1

(12) EUROPÄISCHE PATENTSCHRIFT

(45) Veröffentlichungstag und Bekanntmachung des Hinweises auf die Patenterteilung:
**21.07.1999 Patentblatt 1999/29**

(51) Int. Cl.[6]: **C08G 18/50**, C08G 79/04

(21) Anmeldenummer: **94117989.7**

(22) Anmeldetag: **15.11.1994**

# (54) Flammwidrige Polyurethane

Flame-retardant polyurethanes

Polyuréthanes ignifuges

(84) Benannte Vertragsstaaten:
**AT BE CH DE DK ES FR GB GR IE IT LI NL PT SE**

(30) Priorität: **16.12.1993 DE 4342973**

(43) Veröffentlichungstag der Anmeldung:
**21.06.1995 Patentblatt 1995/25**

(73) Patentinhaber: **Clariant GmbH**
**65929 Frankfurt am Main (DE)**

(72) Erfinder:
- **Sicken, Martin, Dr.**
  **D-51149 Köln (DE)**
- **Staendeke, Horst, Dr.**
  **D-53797 Lohmar (DE)**

(56) Entgegenhaltungen:
**DE-A- 1 520 503**
**FR-A- 2 099 558**
**US-A- 3 639 545**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 658 580 B1

Printed by Xerox (UK) Business Services
2.16.7/3.6

## Beschreibung

Die Erfindung betrifft flammwidrige Polyurethane, welche durch Polyaddition von Polyisocyanaten an Polyole unter Zusatz oligomerer, halogenfreier, Hydroxyalkoxygruppen tragender Phosphorsäureester erhältlich sind.

Die Verwendung von Polyurethanschaum ist in Einsatzgebieten, die hohe Anforderungen an das Brandverhalten der eingesetzten Materialien stellen (z.B. Automobilinnenausstattung und Bauisolierungen), nur mit Hilfe des zusätzlichen Einsatzes von Flammschutzmitteln möglich. Ein Großteil dieser Flammschutzmittel, wie beispielsweise Tris(2-chlorethyl)phosphat, Tris(chlorisopropyl)phosphat, Tris(2,3-dichlorpropyl)phosphat sowie Tetrakis(2-chlorethyl)ethylendiphosphat, werden als Additive eingelagert, was bei thermischer Belastung zu deren teilweiser Emigration führen kann. Dieser nachteilige Effekt, der vor allem bei offenzelligen Schäumen eine erhebliche Rolle spielt, verursacht nicht nur mit der Zeit das Nachlassen der Flammschutzwirkung und damit die Erhöhung des einzusetzenden Flammschutzmittelanteils, sondern führt auch zur Kontamination der Umgebung des Produktes. So tragen solche additiven Zusätze beispielsweise zum sogenannten "Fogging", der Kondensation von verdampften flüchtigen Bestandteilen aus der Kraftfahrzeuginnenausstattung an der Windschutzscheibe, bei. Diese Erscheinung kann nach DIN 75201 quantitativ erfaßt werden.

Eine wesentliche Verbesserung in dieser Hinsicht bedeutet die Verwendung reaktiver (statt additiver) Flammschutzmittel; im Falle von Polyurethan z.B. von phosphor- und chlorhaltigen Polyolen, die allein oder im Gemisch mit konventionellen Polyolen mit Polyisocyanaten zur Reaktion gebracht und somit in das Polymergerüst kovalent eingebunden werden.

Produkte mit guter Flammschutzwirkung werden in der DE-PS 20 36 595 und DE-PS 20 36 587 beschrieben. Dabei handelt es sich um Gemische oligomerer Phosphorsäureester z.B. der allgemeinen Formel (1),

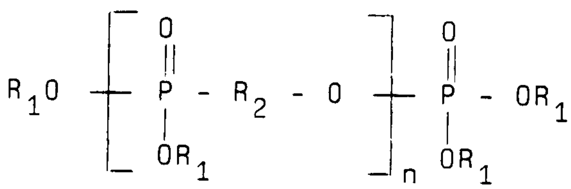

(1)

in denen n = 0 bis 4, $R_1$ ein halogenierter Alkyl- oder Arylrest und mindestens ein hydroxylhaltiger Rest der allgemeinen Formel (2), und $R_2$ ein Rest der allgemeinen Formel (3) ist, wobei in den Formeln (2) und (3) $R_3$ und $R_4$ ein Wasserstoffatom oder einen gegebenenfalls chlorsubstituierten Alkylrest, und m eine Zahl von 1 bis 4 bedeuten.

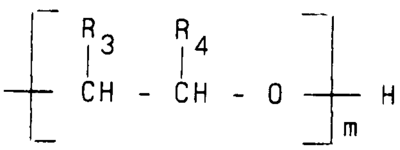

(2)

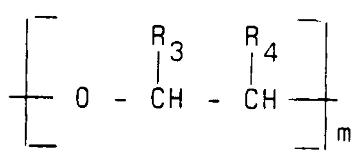

(3)

Weiterhin wird in der DE-PS 20 36 592 ein Verfahren zur Herstellung flammwidriger Polyurethanschaumstoffe beschrieben, die Reaktionsprodukte der allgemeinen Formel (1) als Flammschutzmittel erthalten.

Den oben genannten Produkten der Formel (1) ist gemeinsam, daß sie zur Erreichung der geforderten Flammschutzeffektivität als wesentlichen Bestandteil Halogen in gebundener Form enthalten. Dies ist von Nachteil, da halogenhaltige Produkte im Brandfalle korrosive Halogenwasserstoffe und unter bestimmten Umständen toxische Zersetzungsprodukte freisetzen können.

In der US-Patentschrift 4 458 035 werden Polyutethanschaumstoffe beschrieben, die oligomere Phosphorsäureester der allgemeinen Formel (4) enthalten, in denen n = 0 bis 10, R ein Alkyl- oder Haloalkylrest (C1-C10) und $R_1$ und $R_2$ Wasserstoffatome oder Alkyl- oder Haloalkylreste (C1-C10) sind.

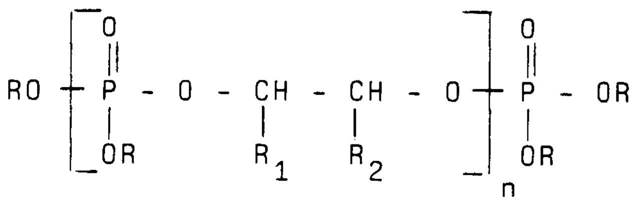

(4)

Produkte der Formel (4) enthalten jedoch keine zur Reaktion mit Isocyanaten befähigten Hydroxylgruppen und sind demnach nicht einbaufähig, was die oben erwähnten Nachteile hat. Eine ausreichende Flammschutzeffektivität wird darüber hinaus nur für halogenhaltige Produkte der Formel (4) belegt.

In der US - Patentschrift 3639545 werden keine oligomeren Phosphosäure ester beschrieben.

Die Aufgabe der vorliegenden Erfindung bestand nun darin, Polyurethanschaumstoffe zu entwickeln, die durch wirksame halogenfreie Flammschutzmittel dauerhaft flammgeschützt sind.

Gelöst wird diese Aufgabe durch flammwidrige Polyurethane, welche dadurch gekennzeichnet sind, daß sie es Flammschutzmittel Gemische Hydroxyalkoxygruppen tragender oligomerer Phosphorsäureester der allgemeinen Formel I enthalten,

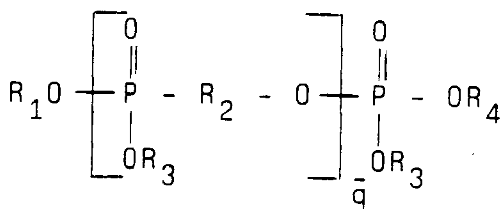

(I)

worin $\bar{q}$ eine durchschnittliche Kettenlänge vor 0,5 bis 10, $R_1$ einen hydroxylhaltigen Rest der allgemeinen Formel II a, $R_2$ einen Rest der allgemeinen Formel III,

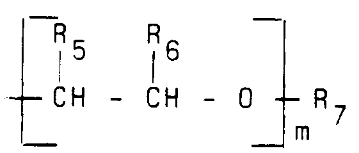

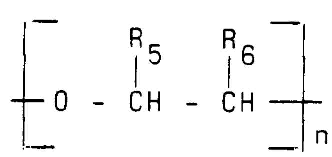

(II a: $R_7$ = H) (III)

(II b: $R_7$ = $C_1$-$C_6$)

$R_3$ einen Rest der allgemeinen Formel II b, $R_4 = R_1$ oder $R_3$; $R_5$, $R_6$ und $R_7$ ein H-Atom oder einen Alkylrest mit 1 bis 6 C-Atomen, m = 0 bis 4 und n = 1 bis 4 bedeuten.

Die Flammschutzmittelgemische der Formel I werden erfindungsgemäß erhalten, indem man in einer ersten Stufe einen oder mehrere ortho-Phosphorsäureester der allgemeinen Formel IV

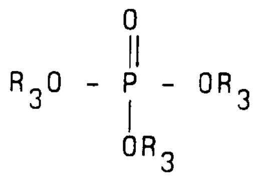

(IV)

mit Phosphorpentoxid im Molverhältnis (2.1 bis 3.5) : 1,0 bei einer Temperatur von 20 bis 180 °C innerhalb von 0,5 bis 72 Stunden in an sich bekannter Weise umsetzt in dem erhaltenen Polyphosphorsäureestergemisch der allgemeinen Formel V, worin $\bar{p}$ eine durchschnittliche Kettenlänge von 4 bis 60 bedeutet,

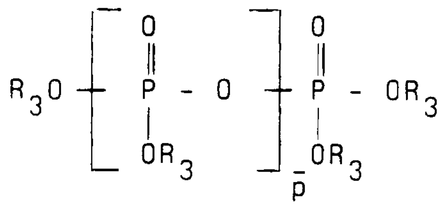

(V)

in einer zweiten Stufe durch Zugabe von Wasser oder einem Glykol der allgemeinen Formel VI,

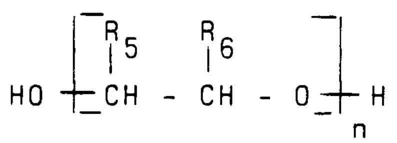

(VI)

wobei $R_5$, $R_6$ und n die oben genannte Bedeutung haben, bei einer Temperatur von 20 bis 100 °C selektiv die P-O-P-Bindungen partiell hydrolysiert oder glykolysiert und das dabei entstehende Gemisch von Polyphosphorsäurepartialestern der allgemeinen Formel VII,

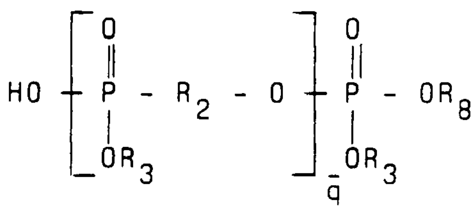

(VII)

worin $R_2$ die oben genannte Bedeutung hat oder null ist, $\bar{q}$ eine verringerte durchschnittliche Kettenlänge von nur noch 0,5 bis 10 bedeutet und $R_8$ die Bedeutung von $R_3$ hat oder ein H-Atom darstellt, in einer dritten Stufe mit einem Epoxid der allgemeinen Formel VIII bei einer Temperatur von 20 bis 180 °C umsetzt.

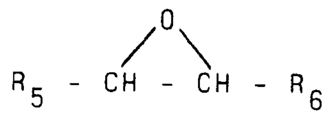

(VIII)

Die Herstellung der Flammschutzmittelgemische der Formel I kann darüber hinaus erfindungsgemäß wahlweise und bevorzugt auch noch dadurch gekennzeichnet sein, daß

a) die Umsetzung während der ersten Stufe bei einer Temperatur von 60 bis 120 °C innerhalb von 0,5 bis 6 Stunden erfolgt;

b) man die Partialhydrolyse der zweiten Stufe bei 50 bis 80 °C durchführt;

c) man in der zweiten Stufe für die Partialhydrolyse 0,2 bis 1,5 Mol Wasser je 1 Mol in der ersten Stufe eingesetzten Ortho-Phosphorsäureester der Formel (IV) zugibt;

d) die Umsetzung in der ersten Stufe in Gegenwart von 0,1 bis 2 Masse-% Phosphoriger Saure $H_3PO_3$, berechnet auf die Gesamtmenge der Ausgangsstoffe der ersten Stufe, erfolgt;

e) die Umsetzung während der dritten Stufe bei einer Temperatur von 70 bis 140 °C erfolgt.

Bevorzugte Ausgangsstoffe der Formel IV für die erste Verfahrensstufe sind solche mit $R_3$ = Methyl, Ethyl, Butyl und Butoxyethyl, wobei insbesondere Methyl und Ethyl geeignet sind. Als Epoxide der Formel VIII kommen vorzugsweise solche in Frage, in denen $R_5$ und $R_6$ ein Wasserstoff- oder Methylradikal bedeuten, insbesondere Ethylenoxid und Propylenoxid.

Die Zusammensetzung der Flammschutzmittelgemische der Formel I aus nahezu ausschließlich hydroxylhaltigen Komponenten wird durch folgende Vorgehensweise erreicht: In der ersten Verfahrensstufe wird ein Molverhältnis der Ausgangsstoffe von (2.1 bis 3.5) zu 1 (Produkte der Formel IV : $P_4O_{10}$) gewählt, wobei man überwiegend Polyphosphorsäureester der Formel V mit hohen durchschnittlichen Kondensationsgraden ($\overline{p}$ = 4 bis 60) erhält. Durch die in der zweiten Stufe folgende partielle Hydrolyse bzw. Glykolyse der Polyphosphorsäureester wird durch die eintretende selektive Spaltung von P-O-P-Bindungen der durchschnittliche Kondensationsgrad $\overline{q}$ auf $\leqq$ 10, vorzugsweise auf 2 bis 5, vermindert. Größere mittlere Kettenlängen führen zu hohen Viskositäten der Endprodukte, was anwendungstechnische Probleme (Dosierung) verursacht; niedrige mittlere Kettenlängen bedingen relativ niedrige Phosphorgehalte im Endprodukt, was zu Einbußen in der Flammschutzeffektivität führt. Es handelt sich bei den entstehenden Produkten um saure Ester der Formel VII, die in der dritten Verfahrensstufe zu den gewünschten Hydroxyalkoxygruppen tragenden Komponenten der Formel I abreagieren.

Die erfindungsgemäßen flammwidrigen Polyurethane werden erhalten, indem man Produkte der Formel I in an sich bekannter Weise alleine oder im Gemisch mit anderen Flammschutzmitteln zusammen mit Polyhydroxyverbindungen (Polyolen) an Polyisocyanate in Gegenwart von Katalysatoran, Stabilisatoren und Wasser oder physikalischen Treibmitteln addiert.

Die erfindungsgemäßen flammwidrigen Polyurethane können wahlweise auch noch dadurch gekennzeichnet sein daß

a) die Flammschutzmittelgemische der Formel I einen Phosphorgehalt von 15 bis 20 Gew.-% und eine Hydroxylzahl von 30 bis 300 mg KOH/g aufweisen;

b) sie 3 bis 50 Gewichtsteile Flammschutzmittelgemisch der Formel I je 100 Gewichtsteile des üblicherweise zur Herstellung der Polyurethane eingesetzten Polyols enthalten,

c) zur Herstellung von Polyurethan-Weichschäumen Polyetherpolyole mit Hydroxylzahlen von 20 bis 100 mg KOH/g als Polyole und Toluylendiisocyanate als Polyisocyanate, sowie Wasser als Treibmittel zum Einsatz kommen;

d) zur Herstellung von flammwidrigen Polyurethan-Weichschäuman 5 bis 10 Gewichtsteile Flammschutzmittelgemisch der Formel I je 100 Teile Polyol verwendet werden;

e) zur Herstellung von Polyurethan-Hartschäumen Polyetherpolyole mit Hydroxylzahlen von 300 bis 1000 mg KOH/g als Polyole und Diphenylmethan-4,4'-diisocyanat als Polyisocyanat, sowie der Fluorchlorkohlanwasserstoff R 141 b als Treibmittel zum Einsatz kommen;

f) zur Herstellung von flammwidrigen Polyurethan-Hartschäumen 20 bis 30 Gewichtsteile Flammschutzmittelgemisch der Formel I je 100 Teile Polyol verwendet werden.

Beispiel 1

In einem Reaktor ausgestattet mit Rührer, Thermometer, Gaseinleitungsrohr und Rückflußkühlar, wurden 700 g (3.84 mol) Triethylphosphat und 10.8 g Phosphorige Säure vorgelegt. Unter Ausschluß von Luftfeuchtigkeit wurden unter starkem Rühren 454.5 g (1.6 mol) $P_4O_{10}$ so hinzugefügt, daß die Temperatur 40 °C nicht überstieg. Anschließend wurde zunächst eine Stunde auf 60 °C, dann 5 Stunden auf 90 °C erhitzt. Die abgekühlte, gelbliche Reaktionsmischung wurde unter externer Eiskühlung so langsam mit 34.6 g (1.92 mol) Wasser versetzt, daß die Reaktionstemperatur maximal 70 °C erreichte. Nach 1 h Rühren bei 70 °C wurde bei einer Temperatur von 130 bis 140 °C Ethylenoxid eingeleitet, bis starker Rückfluß in dem mit Methanol und Trockeneis beschickten Kühler zu beobachten war. Nach 1 h Nachreaktion bei 130 bis 140 °C wurde der verbliebene Ethylenoxid-Überschuß mittels Durchleiten eines starken Stickstoffstroms aus dem Reaktionsgemisch entfernt. So wurden 1813 g einer schwach gelblichen Flüssigkeit mit einer Brookfield-Viskosität von 1570 mPa.s (25 °C), einer Säurezahl von 0,9 mg KOH/g sowie einer Hydroxylzahl von 125 mg KOH/g erhalten. Das Produkt (Formel I) mit $\bar{q} = 3$, $R_3$ = Ethyl (m = 0, $R_7$ = Ethyl), $R_5$ und $R_6$ = H, enthielt 17.7 % Phosphor (Masse-%).

Beispiel 2

Das Produkt gemäß Beispiel 1 wurde in einen Polyurethanweichschaum folgender Formulierung (Gewichtsteile) inkorporiert:

| | |
|---|---|
| 100 Teile | Polyetherpolyol (®Caradol 48-2, Shell) |
| 7.5 Teile | Produkt aus Beispiel 1 |
| 4.0 Teile | Wasser |
| 0.4 Teile | Dimethylethanolamin |
| 0.2 Teile | Zinnoctoat (®Desmorapid SO, Bayer) |
| 1.0 Teile | Siliconstabilisator (®Tegostab B 3640, Goldschmidt) |
| 51 Teile | Toluylendiisocyanat (®Desmodur T 80, Bayer) |

Zur Herstellung des Versuchsschaumes wurden alle Komponenten - mit Ausnahme des Toluylandiisocyanates - intensiv vermischt und anschließend mit diesem versetzt. Nach einer Startzeit von 15 sec, einer Steigzeit von 150 sec und einer Nachbehandlung von 15 min bei 140 °C Umluft wurde ein Polyurethan-Weichschaum mit einem Raumgewicht von 29 kg/$m^3$ erhalten.

Beispiel 3 (Vergleichsbeispiel)

Analog zu Rezeptur und Herstellvorschrift in Beispiel 2 wurde ein Versuchsschaum mit 7.5 Gewichtsteilen, berechnet auf eingesetztes Polyol, eines Produktes gemäß Beispiel 1 der DE-PS 20 36 595 hergestellt. Nach einer Startzeit von 22 sec, einer Steigzeit von 134 sec und einer wie oben beschriebenen Nachbehandlung wurde ein Polyurethan-Weichschaum mit einem Raumgewicht von 27 kg/$m^3$ erhalten.

Zur Ermittlung der Flammwidrigkeit der Versuchsschäume gemäß Beispiel 2 (Schaum A) und Vergleichsbeispiel 3 (Schaum B) wurden die Sauerstoffindices (LOI) nach ASTM-D-2863-77 bestimmt und der amerikanische Test FMVSS-302 (FMVSS = Federal Motor Vehicle Safety Standard) durchgeführt.

Gemäß DIN 75201-G wurden die Schäume bezüglich ihres Foggingverhaltens geprüft.

Folgende Resultate wurden erhalten:

| | Schaum A (erfindungsgemäß) | Schaum B (Vergleich) |
|---|---|---|
| Sauerstoffindex (ASTM-D-2863-77) | 22.5 | 23.0 |
| FMVSS 302: | | |
| Klassifizierung: | SE[1)] | SE[1)] |
| mittlere Brandstrecke | 22 mm | 24 mm |
| Fogging-Wert G (DIN 75201 G) | 0.6 mg | 2.7 mg |

1) Selbstverlöschend nach einer mittleren Brandstrecke von < 38 mm.

Die Tabelle zeigt deutlich die hervorragenden Eigenschaften dar erfindungsgemäßen Polyurethanweichschäume. Während die ausgezeichneten flammhemmenden Eigenschaften zwar auch von den bekannten Produkten gemäß den DE-PS 20 36 587 und 20 36 595 erzielt werden können, dokumentiert sich die Überlegenheit der erfindungsgemäßen Polyurethan-Weichschäume dadurch, daß die Flammwidrigkeit ohne den Einsat; von Halogen erreicht wird sowie durch den deutlich verminderten Fogging-Wert, der die drastisch erhöhte Migrationsbestandigkeit zum Ausdruck bringt.

Beispiele 4 bis 9

Nach folgender allgemeiner Rezeptur (Gewichtsteile) wurden Polyurethanhartschäume mit Raumgewichten von 30 bis 35 kg/$m^3$ hergestellt:

| | |
|---|---|
| 100 Teile | Polyetherpolyol (®Caradol 585-8 Shell) variable Teile Flammschutzmittel |
| 3.0 Teile | Wasser |
| 2.5 Teile | Katalysator (Dimethylcyclohexylamin) |
| 2.o Teile | Siliconstabilisator (®DC 193, Dow Corning GmbH) |
| variable Teile | Treibmittel (R 141 b) |
| variable Teile | Polyisocyanat (®Caradate 30, Shell), NCO-Index: 110 |

Zur Beurteilung der Flammwidrigkeit wurden Brandtests nach DIN 4102 Teil 1 durchgeführt. Für PUR-Hartschaume, die in Deutschland als Baustoffe (Dämmstoffe) eingesetzt werden sollen, ist die Einstufung in die Klasse DIN 4102 B2 verbindlich vorgeschrieben.

In der nachfolgenden Tabelle sind die Ergebnisse der Brandtests zusammengefaßt:

| Beispiel | Flammschutzmittel | Menge (php)[1)] | DIN 4102 | |
|---|---|---|---|---|
| | | | Flammenhöhe (mm)[2)] | Klasse |
| 4 | Produkt gemäß Beispiel 1 | 10 | > 150 | B3 |
| 5 | Produkt gemäß Beispiel 1 | 20 | 135-150 | B2 |
| 6 | Produkt gemäß Beispiel 1 | 30 | < 135 | B2 |
| 7 | Tris(chlorisopropyl)phosphat | 10 | > 150 | B3 |
| 8 | Tris(chlorisopropyl)phosphat | 20 | > 150 | B3 |
| 9 | Tris(chlorisopropyl)phosphat | 30 | 135-150 | B2 |

1) php = parts per 100 parts of polyol
2) Mittelwert aus 5 Einzelmassungen

Die Tabelle zeigt deutlich die hohe Flammwidrigkeit der erfindungsgemäßen Polyurethanhartschäume. Bereits mit 20 php das Flammschutzmittels aus Beispiel 1 erreicht man eine DIN 4102-B2-Einstufung, was bei Polyurethanhartschäumen, die das in großtechnischem Maße eingesetzte Tris(chlorisopropyl)phosphat enthalten, erst bei einer Dosierung von 30 php erreicht wird. Die Verwendung von Tris(chlorisopropyl)phosphat als Flammschutzmittel in Polyurethanhartschäumen ist in der DE-AS 16 94 430 beschrieben.

## Patentansprüche

1. Flammwidrige Polyurethane, dadurch gekennzeichnet, daß sie als Flammschutzmittel Gemische Hydroxyalkoxygruppen tragender oligomerer Phosphorsäureester der allgemeinen Formel I enthalten,

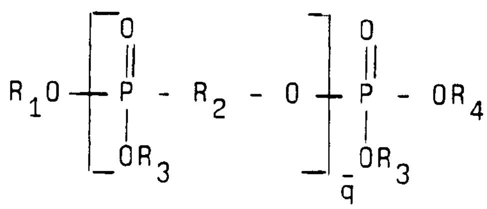

(I)

worin $\bar{q}$ eine durchschnittliche Kettenlänge von 0,5 bis 10, $R_1$ einen hydroxylhaltigen Rest dar allgemeinen Formel II a, $R_2$ einen Rest der allgemeinen Formel III

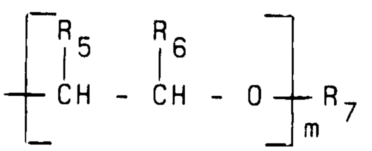

(II a: $R_7$ = H)
(II b: $R_7$ = $C_1$-$C_6$)

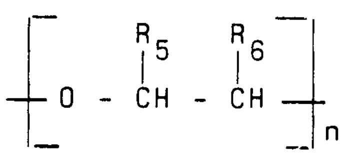

(III)

$R_3$ einen Rest der allgemeinen Formel II b, $R_4$ = $R_1$ oder $R_3$; $R_5$, $R_6$ und $R_7$ ein H-Atom oder einen Alkylrest mit 1 bis 6 C-Atomen, m = 0 bis 4 und n = 1 bis 4 bedeuten.

2. Flammwidrige Polyurethane nach Anspruch 1, dadurch gekennzeichnet, daß das Flammschutzmittel der Formel I erhalten wird, indem man in einer ersten Stufe einen oder mehrere ortho-Phosphorsäureester der allgemeinen Formel IV

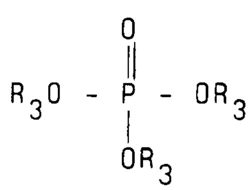

(IV)

mit Phosphorpentoxid im Molverhältnis (2.1 b.s 3.5) : 1,0 bei einer Temperatur von 20 bis 180 °C innerhalb von 0,5 bis 72 Stunden in an sich bekannter Weise umsetzt, in dem erhaltenen Polyphosphorsäureestergemisch der allgemeinen Formel V,

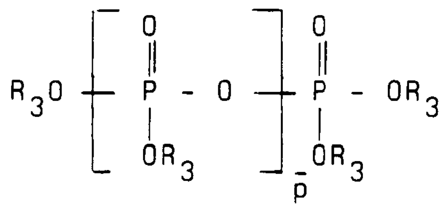

(V)

worin $\bar{p}$ eine durchschnittliche Kettenlänge von 4 bis 60 bedeutet, in einer zweiten Stufe durch Zugabe von Wasser oder einem Glykol der allgemeinen Formel VI,

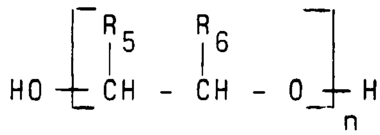

(VI)

wobei $R_5$, $R_6$ und n die oben genannte Bedeutung haben, bei einer Temperatur von 20 bis 100 °C selektiv die P-O-P-Bindungen partiell hydrolysiert oder glykolysiert und das dabei entstehende Gemisch von Polyphosphorsäurepartialestern dar allgemeinen Formel VII,

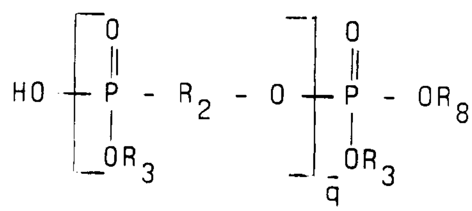

(VII)

worin $R_2$ die oben genannte Bedeutung hat oder null ist, $\bar{q}$ eine verringerte durchschnittliche Kettenlänge von nur noch 0,5 bis 10 bedeutet und $R_8$ die Bedeutung von $R_3$ hat oder ein H-Atom darstellt, in einer dritten Stufe mit einem Epoxid der allgemeinen Formel VIII bei einer Temperatur von 20 bis 180 °C umsetzt.

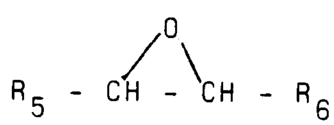

(VIII)

3. Flammwidrige Polyurethane nach Anspruch 1 oder 2, dadurch gekennzeichnet, daß die Flammschutzmittelgemische der Formel I einen Phosphorgehalt von 15 bis 20 Gew.-% und eine Hydroxylzahl von 30 bis 300 mg KOH/g aufweisen.

4. Flammwidrige Polyurethane nach einem der Ansprüche 1 bis 3, dadurch gekennzeichnet, daß sie 3 bis 50 Gewichtsteile Flammschutzmittelgemisch dar Formel I je 100 Gewichtsteile des üblicherweise zur Herstellung der Polyurethane eingesetzten Polyols enthalten.

## Claims

1. A flame-resistant polyurethane which comprises, as the flameproofing agent, a mixture of oligomeric phosphoric acid esters which carry hydroxyalkoxy groups, of the formula I

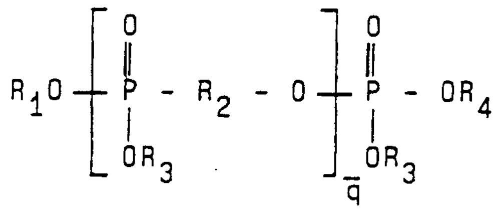

(I)

in which $\bar{q}$ denotes an average chain length of 0.5 to 10, $R_1$ is a hydroxyl-containing radical of the formula II a, $R_2$ is a radical of the formula III

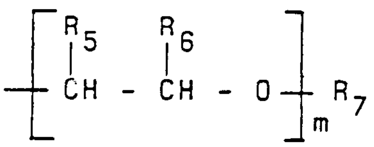

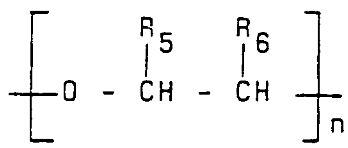

(II a: $R_7$ = H) (III)
(II b: $R_7$ = $C_1$-$C_6$)

$R_3$ is a radical of the formula II b, $R_4$ is $R_1$ or $R_3$; $R_5$, $R_6$ and $R_7$ are an H atom or an alkyl radical having 1 to 6 carbon atoms, m is 0 to 4 and n is 1 to 4.

2. A flame-resistant polyurethane as claimed in claim 1, wherein the flameproofing agent of the formula I is obtained by reacting one or more ortho-phosphoric acid esters of the formula IV

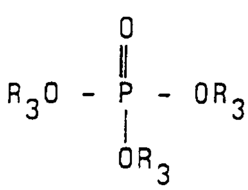

(IV)

with phosphorus pentoxide in a first stage in a manner which is known per se in a molar ratio of (2.1 to 3.5) : 1.0 at a temperature of 20 to 180°C in the course of 0.5 to 72 hours, in the resulting polyphosphoric acid ester mixture of the formula V

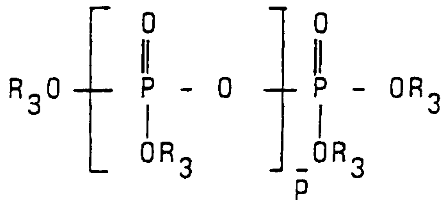

(V)

in which $\bar{p}$ denotes an average chain length of 4 to 60, partly hydrolyzing or glycolyzing the P-O-P bonds selectively in a second stage by addition of water or a glycol of the formula VI

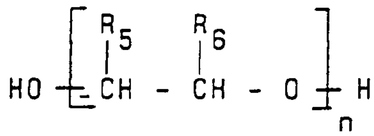

(VI)

in which $R_5$, $R_6$ and n have the abovementioned meaning, at a temperature of 20 to 100°C, and reacting the resulting mixture of polyphosphoric acid partial esters of the formula VII

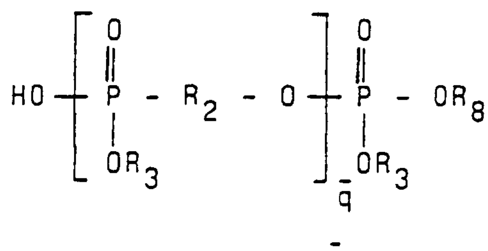

(VII)

in which $R_2$ has the abovementioned meaning or is zero, $\bar{q}$ denotes a reduced average chain length of only 0.5 to 10 and $R_8$ has the meaning of $R_3$ or is an H atom, with an epoxide of the formula VIII in a third stage at a temperature of 20 to 180°C.

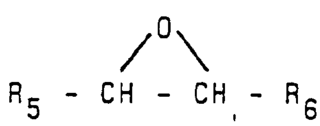

(VIII)

**3.** A flame-resistant polyurethane as claimed in claim 1 or 2, wherein the flameproofing agent mixture of the formula I has a phosphorus content of 15 to 20 % by weight and a hydroxyl number of 30 to 300 mg of KOH/g.

4. A flame-resistant polyurethane as claimed in any one of claims 1 to 3, which comprises 3 to 50 parts by weight of flameproofing agent mixture of the formula I per 100 parts by weight of the polyol usually employed for the preparation of the polyurethane.

## Revendications

1. Polyuréthanes ininflammables caractérisés en ce qu'ils contiennent comme agent ignifuge des mélanges d'esters d'acides phosphoriques oligomères portant des groupes hydroxyalcoxy de la formule générale I,

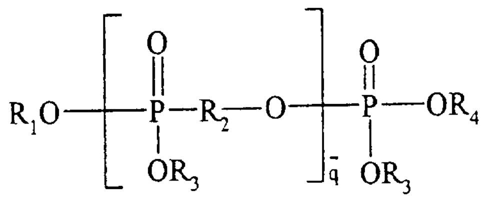

(I)

dans laquelle $\bar{q}$ représente une longueur moyenne de chaîne de 0,5 à 10, $R_1$ représente un reste contenant un groupe hydroxyle de la formule générale II a, $R_2$ représente un reste de la formule générale III

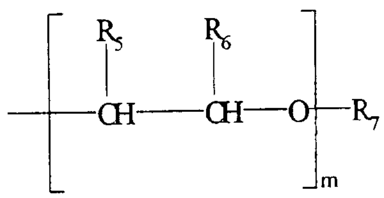

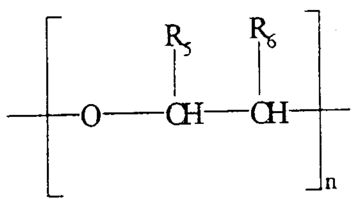

(II a: $R_7$ = H)

(II b: $R_7$ = $C_1$-$C_6$)

(III)

$R_3$ représente un reste de la formule générale II b, $R_4$ = $R_1$ ou $R_3$; $R_5$, $R_6$ et $R_7$ représentent un atome H ou un reste alkyle avec de 1 à 6 atomes C, m = 0 à 4 et n = 1 à 4.

2. Polyuréthanes ininflammables selon la revendication 1 caractérisés en ce que l'on obtient l'agent ignifuge de la formule I en ce que l'on fait réagir de manière connue en elle-même à une température de 20 à 180°C en l'espace de 0,5 à 72 heures un ou plusieurs esters d'acides ortho- phosphoriques de la formule générale IV

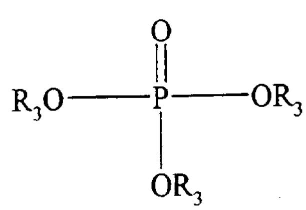

(IV)

avec du pentoxyde de phosphore à un rapport molaire de (2,1 à 3,5) : 1,0 dans une première étape, en ce que l'on hydrolyse ou on glycolyse partiellement sélectivement les liaisons P-O-P dans le mélange d'esters d'acides polyphosphoriques produit de la formule générale V,

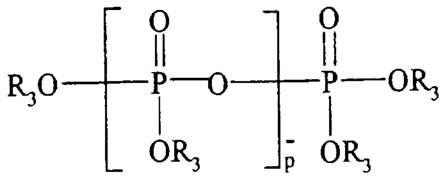

(V)

dans laquelle $\bar{p}$ représente une longueur moyenne de chaîne de 4 à 60, dans une seconde étape par addition d'eau ou d'un glycol de la formule générale VI,

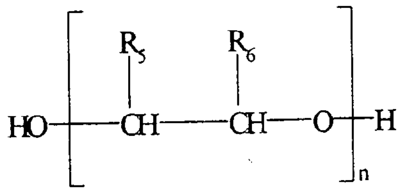

(VI)

dans laquelle $R_5$, $R_6$ et n ont la signification citée ci-dessus, à une température de 20 à 100°C et en ce que l'on fait réagir le mélange d'esters partiels d'acides polyphosphoriques de la formule générale VII ce faisant produit,

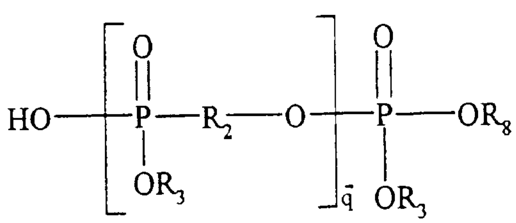

(VII)

dans laquelle $R_2$ à la signification citée ci-dessus ou est inexistant, $\bar{q}$ représente une longueur moyenne de chaîne abaissée uniquement encore égale à de 0,5 à 10 et $R_8$ a la signification de $R_3$ ou représente un atome H, dans une troisième étape avec un époxyde de la formule générale VIII à une température de 20 à 180°C.

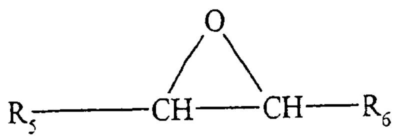

(VIII)

3. Polyuréthanes ininflammables selon la revendication 1 ou 2 caractérisés en ce que les mélanges d'agents ignifuges de la formule I présentent une teneur en phosphore de 15 à 20% en poids et un indice hydroxyle de 30 à 300 mg de KOH/g.

4. Polyuréthanes ininflammables selon l'une quelconque des revendications 1 à 3 caractérisés en ce qu'ils contiennent de 3 à 50 parties en poids de mélange d'agents ignifuges de la formule I pour 100 parties en poids du polyol utilisé classiquement pour la préparation des polyuréthanes.